# EUROPEAN PATENT APPLICATION

(11) **EP 3 865 993 A1**
(43) Date of publication of application: **18.08.2021**
(21) Application number: 20204173.7
(22) Date of filing: 27.10.2020
(51) Int. Cl.: G06F 3/12, H04N 1/00, G06K 9/00, G06F 3/048

(54) **SYSTEM AND METHOD FOR DYNAMIC DEVICE USER INTERFACE GENERATION BASED ON USER CHARACTERISTICS**

(30) Priority: 13.02.2020 US 202016790280
(71) Applicant: Toshiba TEC Kabushiki Kaisha, Tokyo 141-8562 (JP)
(72) Inventor: SU, William, Shinagawa-ku, Tokyo 141-8562 (JP)
(74) Representative: Bandpay & Greuter

(57) **Abstract**

A system and method for dynamic generation and implementation of a multifunction peripheral device user interfaces is based on detected user characteristics. User interface data for each of a plurality of user interface options is stored in a memory. Each user interface option is associated with one or more physical user characteristics. Digital images, including an image of the user, are captured and physical characteristics are detected. A device user interface is selected which corresponds to detected physical characteristics. The selected user interface is installed on a touchscreen of the device as the device user interface. Document processing instructions are received from the user via the installed user interface, and corresponding document processing operations are undertaken.

## Description

### TECHNICAL FIELD

This application relates generally to user interfaces for document processing devices. The application relates more particularly to automatically generating device user interfaces in accordance with visually identifiable user characteristics such as age, gender, height, attire persona, behavior or mood.

### BACKGROUND

Document processing devices include printers, copiers, scanners and e-mail gateways. More recently, devices employing two or more of these functions are found in office environments. These devices are referred to as multifunction peripherals (MFPs) or multifunction devices (MFDs). As used herein, MFPs are understood to comprise printers, alone or in combination with other of the afore-noted functions. It is further understood that any suitable document processing device can be used.

MFPs are powerful business tools that can perform many complex document processing functions. Device user interaction is typically via a touchscreen user interface which provides text and graphics that make device operation simple, streamlined and intuitive.

### SUMMARY OF THE INVENTION

To solve the abovementioned problems, there is provided a system comprising:
a user interface including a touchscreen;
memory storing interface data for each of a plurality of user interface options, wherein each user interface option is associated with one or more physical user characteristics;
a document processing engine;
a data interface;
a camera configured to capture digital images; and
a processor configured to:
   detect physical characteristics of a user from a digital image captured from the camera,
   select a user interface option associated with physical user characteristics that correspond to detected physical characteristics,
   install the selected user interface on the touchscreen;
   receive a document processing instruction via the selected user interface from the user via the touchscreen, and
   commence a document processing operation on the document processing engine in accordance with the received document processing instruction.

Preferably, the camera is further configured capture a sequence of digital images, and the processor is further configured to detect a user in motion in accordance with the captured sequence of digital images, and detect the physical characteristics responsive to detected user motion.

Preferably, the processor is further configured to identify a device user in accordance with detected physical characteristics.

Preferably, the physical user characteristics include one or more of user height, user age, or user gender, and user apparel.

Preferably, the processor is further configured to: receive an electronic document provided by a user; analyze content of the received electronic document; and identify a physical characteristic of the user in accordance with analyzed electronic document content.

Preferably, the processor is further configured to: determine when detected physical characteristics are insufficient to select a user interface option, and install a default user interface when a determination is made that detected physical characteristics are insufficient.

Preferably, the processor is further configured to: generate an acceptability prompt on the user interface onto which the selected user interface is installed, and selectively install a default user interface in accordance with user input received responsive to the acceptability prompt.

There is also provided a method comprising:
storing, in a memory, user interface data for each of a plurality of user interface options, wherein each user interface option is associated with one or more physical user characteristics;
capturing, by a camera, digital images;
detecting, via a processor, physical characteristics of a user from a digital image captured from the camera;
selecting a user interface option associated with physical user characteristics that correspond to detected physical characteristics;
installing the selected user interface option on a touchscreen user interface;
receiving a document processing instruction via the selected user interface option from a user via the touchscreen; and
commencing a document processing operation on a document processing engine in accordance with the received document processing instruction.

Preferably, the method further comprises: capturing a sequence of digital images; detecting a user in motion in accordance with a captured sequence of digital images; and detecting the physical characteristics responsive to detected user motion.

Preferably, the method further comprises identifying a device user in accordance with detected physical characteristics.

Preferably, the physical user characteristics include one or more of user height, user age, or user gender, and user apparel.

Preferably, the method further comprises receiving an electronic document provided by a user; analyzing content of the received electronic document; and identifying a physical characteristic of the user in accordance with analyzed electronic document content.

Preferably, the method further comprises: determining when detected physical characteristics are insufficient to select a user interface option; and installing a default user interface when a determination is made that detected physical characteristics are insufficient.

Preferably, the method further comprises: generating an acceptability prompt on the user interface onto which the selected user interface is installed; and selectively installing a default user interface in accordance with user input received responsive to the acceptability prompt.

### BRIEF DESCRIPTION OF THE DRAWINGS

Various embodiments will become better understood with regard to the following description, appended claims and accompanying drawings wherein:
FIGURE 1 is an example embodiment of an MFP user interface determination and implementation system;
FIGURE 2 is an example embodiment of a networked document rendering system;
FIGURE 3 is an example embodiment of a digital device system;
FIGURE 4 is a flowchart of an example embodiment of a system for dynamic device user interface generation based on user characteristics;
FIGURE 5 is a first example embodiment of a dynamic user interface generation system;
FIGURE 6 is a second example embodiment of a dynamic user interface generation system;
FIGURE 7 is a third example embodiment of a dynamic user interface generation system;
FIGURE 8 is a fourth example embodiment of a dynamic user interface generation system;
FIGURE 9 is a fifth example embodiment of a dynamic user interface generation system;
FIGURE 10 is a sixth example embodiment of a dynamic user interface generation system;
FIGURE 11 is a seventh example embodiment of a dynamic user interface generation system; and
FIGURE 12 is an eighth example embodiment of a dynamic user interface generation system.

### DETAILED DESCRIPTION

The systems and methods disclosed herein are described in detail by way of examples and with reference to the figures. It will be appreciated that modifications to disclosed and described examples, arrangements, configurations, components, elements, apparatuses, devices methods, systems, etc. can suitably be made and may be desired for a specific application. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such.

In example embodiments disclosed herein machine learning is employed to improve user interfaces specifically designed for a user. When a user walks in front of an MFP, their motion is detected by an associated digital camera which then proceeds to identify and verify the user. The system captures video images of the user and detects a user's physical features such as facial data points, facial expressions, posture, movements, gestures, attire, color choice, hair/facial hair length/color, eyewear, accessories, and the like to accurately authenticate and categorize the user. The system also looks to content associated with the user, such as what the user is printing or scanning. The system works to determine a value for the user's age, gender, clothes style, color choices, appearance and mood. Such determinations provide for selection of a MFP user interface that would be of particular relevance for the user.

In an example embodiment, the MFP creates user persona in order to represent the different user types and meet the needs of the users. If the user is an adolescent boy, the front panel UI for this user is selected as one that would be optimized for a boy of that age range. By way of further example, a pink feminine front panel user interface might be one to be avoided in such situations. In another example, if the user is a person determined to be elderly, the front panel displayed for this user might be simplified and include larger text or icons.

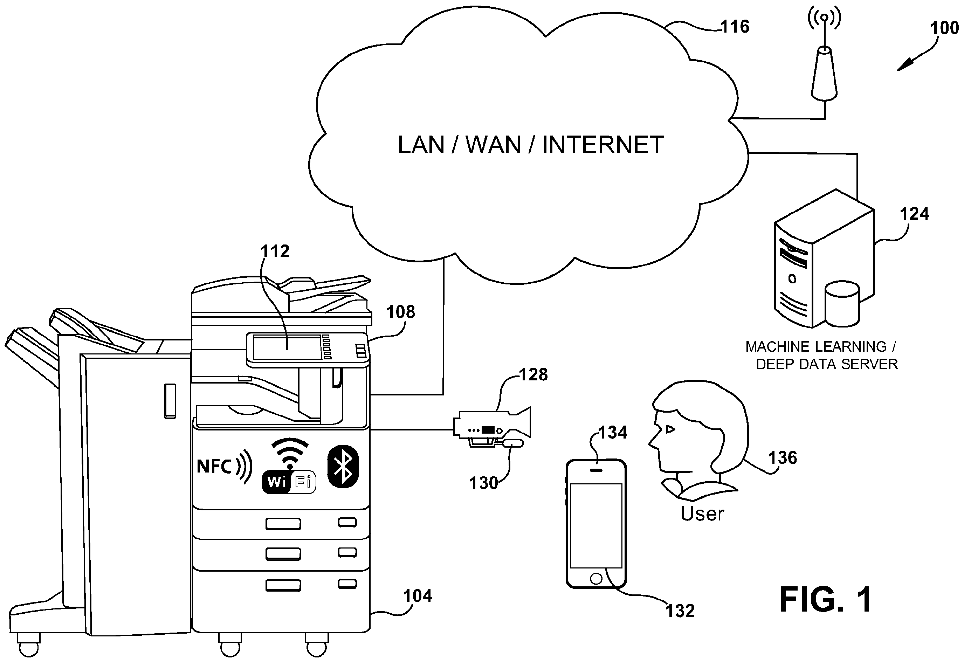

In accordance with the subject application, FIGURE 1 illustrates an example embodiment of an MFP user interface determination and implementation system 100 that includes one or more MFPs, illustrated by way of example by MFP 104. MFP 104 includes a user interface 108 suitably comprised of touchscreen 112. MFP 104 is in network communication with network cloud 116, suitably comprised of any wireless or wired local area network (LAN) or a wide area network (WAN) which can comprise the Internet, or any suitable combination thereof. Also in network communication are one or more digital devices including, for example server 124, suitably enabled for deep data and machine learning operation as will be detailed further below. MFP 104 includes an associated digital camera 128 for capturing of still or motion video images. Camera 128 is suitably provided with a digital microphone 130 to capture user speech. Camera 128 is suitably integrated with MFP 104, or alternatively, provided with a separate camera unit in wireless or wired data communication. Alternatively, a digital camera may be associated with a user device, such as a tablet or smartphone. In the illustrated embodiment, smartphone 132 includes an integrated camera 134. In either instance, the digital camera captures one or more images as of a user, such as user 136. When a fixed camera, such as camera 128 is used, presence of a user can be triggered by user motion as they approach MFP 104.

In the example embodiment of FIGURE 1, when user 136 approaches MFP 104, their motion is detected by camera 128 which then captures a sequences of images of the user. User features are extracted to determine their characteristics. Facial hair, for example, can be an indicator that the user is a mature male. White or gray hair can be an indicator that the user is elderly. Slouched posture and relatively slow movement can be further indicators of an elderly user. Detection of user accessories, such as a wheelchair, can indicate that the user has physical challenges. Presence of a guide dog or a cane can indicate that the user is visually impaired. A frown or furled eyebrows can indicate that the user is worried, depressed or concerned. In the embodiments herein, various user attributes are captured and stored, in addition to associated user identities and data already associated with the user. When a user is identified, for example, the MFP might look up their stored address profile and determine their actual age and gender. This information can be stored associatively with their physical attributes. Such accumulated information is suitably stored in server 124 for continued refinement and categorization for use with the user and other future device users. Server 124 suitably performs operations on resultant deep data by any suitable machine learning system. Suitable machine learning systems are built on available third party platforms such as R-Script, Microsoft Azure, Google Next, Kaggle.com or the like.

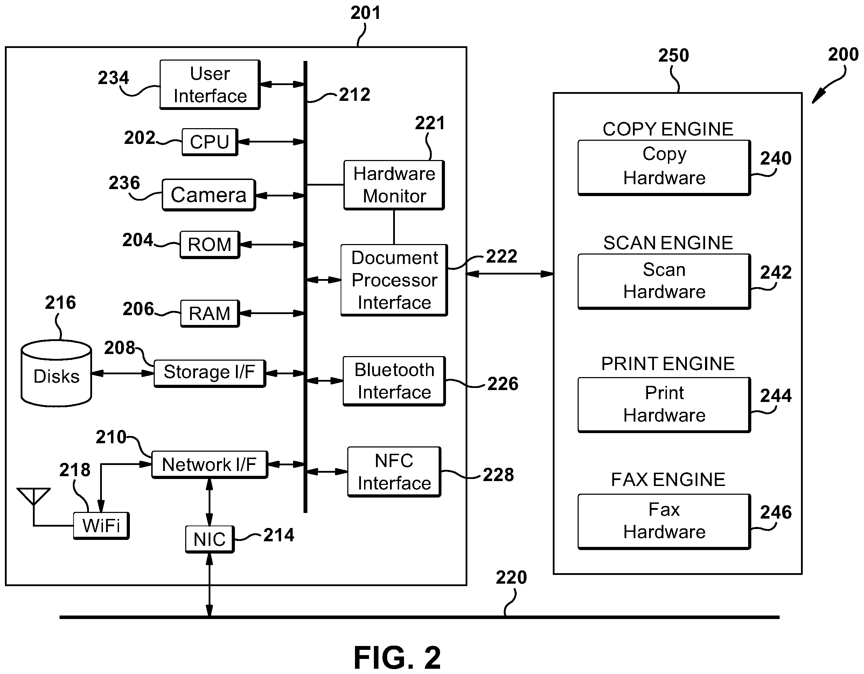

Turning now to FIGURE 2 illustrated is an example embodiment of a networked digital device comprised of document rendering system 200 suitably comprised within an MFP, such as with MFP 104 of FIGURE 1. It will be appreciated that an MFP includes an intelligent controller 201 which is itself a computer system. Included in controller 201 are one or more processors, such as that illustrated by processor 202. Each processor is suitably associated with non-volatile memory, such as read only memory (ROM) 204, and random access memory (RAM) 206, via a data bus 212.

Processor 202 is also in data communication with a storage interface 208 for reading or writing data with storage 216, suitably comprised of a hard disk, optical disk, solid-state disk, cloud-based storage, or any other suitable data storage as will be appreciated by one of ordinary skill in the art.

Processor 202 is also in data communication with a network interface 210 which provides an interface to a network interface controller (NIC) 214, which in turn provides a data path to any suitable wired or physical network connection 220, or to a wireless data connection via a wireless network interface, such as WiFi 218. Example wireless connections include cellular, Wi-Fi, near field communication (NFC), wireless universal serial bus (wireless USB), satellite, and the like. Example wired interfaces include Ethernet, USB, IEEE 1394 (FireWire), Lightning, telephone line, or the like. Processor 202 is also in data communication with a hardware monitor 221, suitably amassing state data from subassemblies, sensors, digital thermometers, or the like, and suitably including digital state date including device codes, such as device error codes. Processor 202 can also be in data communication a document processor interface 222, with Bluetooth interface 226 and NFC interface 228 via data path 212.

Processor 202 can also be in data communication with any suitable user input/output (I/O) interface 234 which provides data communication with user peripherals, such as displays, keyboards, mice, track balls, touch screens, or the like. Processor 202 is also in data communication with digital camera 236.

Document processor interface 222 is suitable for data communication with MFP functional units 250. In the illustrate example, these units include a copy engine, suitably comprised of copy hardware 240, a scan engine, suitably comprised of scan hardware 242, a print engine, suitably comprised of print hardware 244 and a fax engine, suitably comprised of fax hardware 246. These subsystems together comprise MFP functional hardware 250. It will be understood that functional units are suitably comprised of intelligent units, including any suitable hardware or software platform.

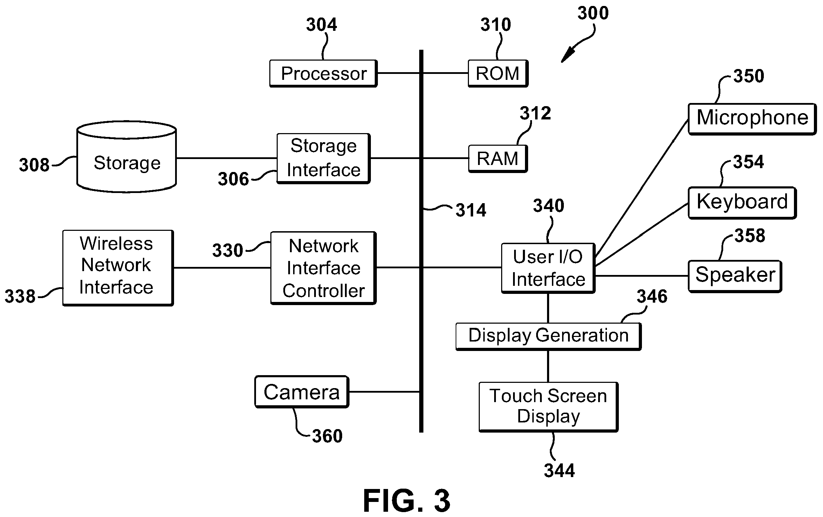

Turning now to FIGURE 3, illustrated is an example of a digital device system 300 suitably comprising smartphone 132 of FIGURE 1. Included are one or more processors, such as that illustrated by processor 304. Each processor is suitably associated with non-volatile memory, such as read only memory (ROM) 310 and random access memory (RAM) 312, via a data bus 314.

Processor 304 is also in data communication with a storage interface 306 for reading or writing to a data storage system 308, suitably comprised of a hard disk, optical disk, solid-state disk, or any other suitable data storage as will be appreciated by one of ordinary skill in the art.

Processor 304 is also in data communication with a network interface controller (NIC) 330, which provides a data path to any suitable network or device connection, such as a suitable wireless data connection via wireless network interface 338. A suitable data connection to an MFP or server is via a data network, such as a local area network (LAN), a wide area network (WAN), which may comprise the Internet, or any suitable combination thereof. A digital data connection is also suitably directly with an MFP or server, such as via Bluetooth, optical data transfer, Wi-Fi direct, or the like.

Processor 304 is also in data communication with a user input/output (I/O) interface 340 which provides data communication with user peripherals, such as touch screen display 344 via display generator 346, as well as keyboards, mice, track balls, touch screens, or the like. It will be understood that functional units are suitably comprised of intelligent units, including any suitable hardware or software platform. Processor 304 is also in data communication with digital camera 360. I/O interface 340 also provides connection to microphone 350, keyboard 354 and speaker 358.

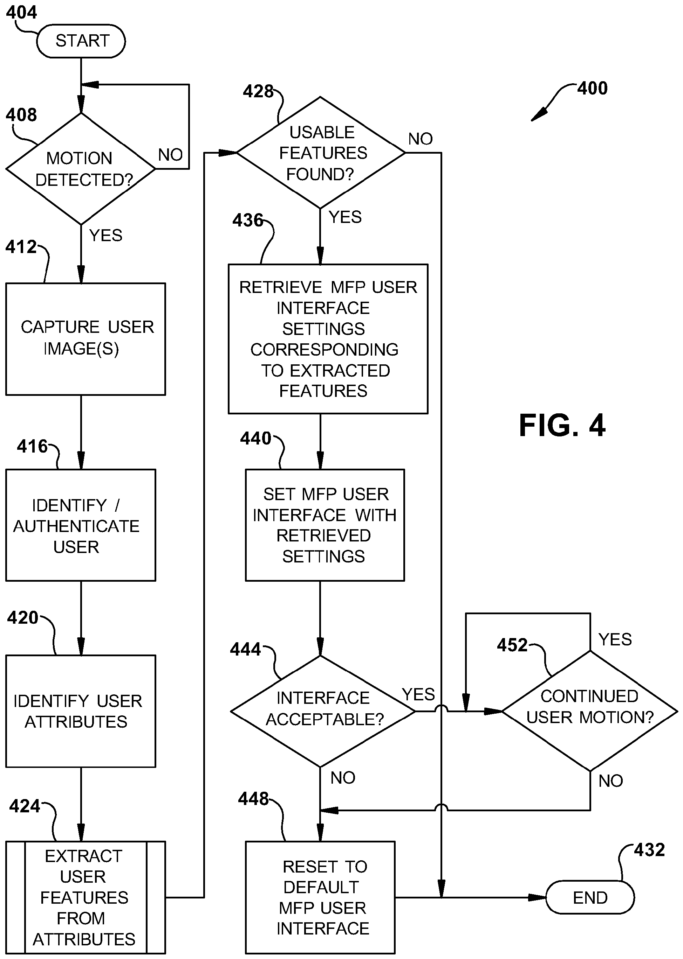

FIGURE 4 illustrates a flowchart 100 of an example embodiment of a system for dynamic device user interface generation based on user characteristics. The process commences at block 404 and progresses to block 408, where it remains until user motion is detected by a digital camera. When motion is detected, the process proceeds to block 412 where one or more user images are captured. A captured user image is used at block 416 to identify and authenticate the user, suitably by comparison with previously stored physical user characteristics. Alternatively, a new user may be prompted to enter sufficient information to allow the device access and to create a user use record. Next, user attributes are identified at block 420, and features extracted at block 424. If no usable features are detected at block 428, the process suitably ends at block 432. If usable user features are found, an MFP user interface is retrieved or constructed at block 436, and set to the MFP's touchscreen at block 440. The user can accept or reject the interface created for them at block 444. If they reject the interface, the interface is reset to the default user interface at block 448 and the process ends at block 432. If they accept it, progress is made to block 452 where it remains until no further user motion is detected, presumably when the user leaves the MFP. At such point, a return is made to the default user interface at block 448 before the process ends at block 432.

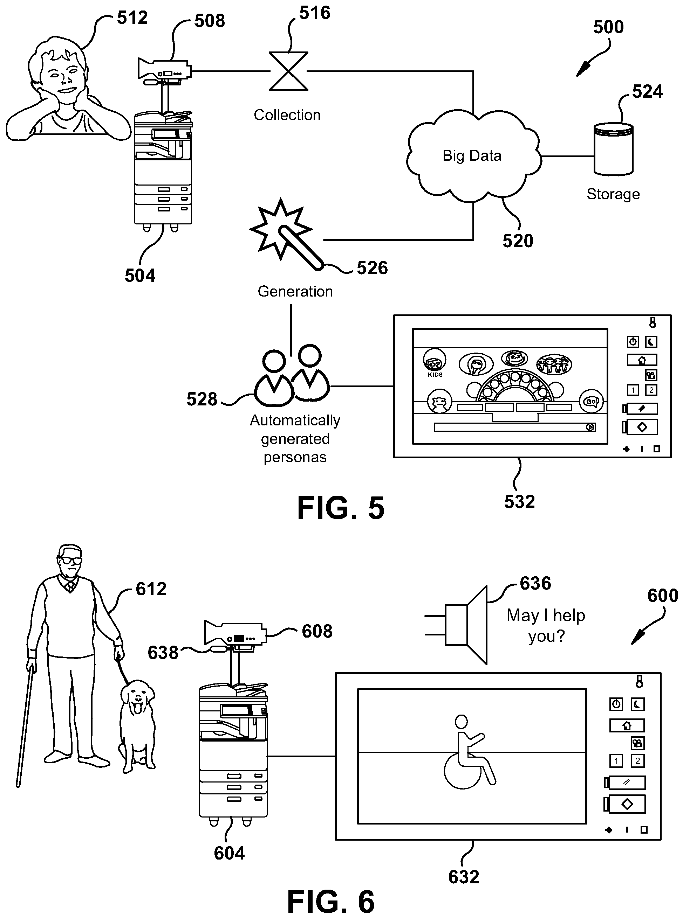

FIGURE 5 illustrates an example embodiment of a dynamic user interface generation system 500 including MFP 504 and associated camera 508. In this example, camera 508 captures a picture of user 512, the characteristics of whom lead to a conclusion that he is a small child. This is done via data collection 516, which data is added to big data 520, suitably stored on a server storage 524. A child interface is generated at 526, resulting in one or more automatically generated personas 528, leading to a child-friendly user interface 532.

FIGURE 6 illustrates an example embodiment of a dynamic user interface generation system 600 including MFP 604 and associated camera 608. In this example, camera 608 captures a picture of user 612, the characteristics of whom lead to a conclusion that he is visually impaired. In this instance, user interface 632 is generated and employs audible/verbal communication and control with speaker 636 and microphone 638.

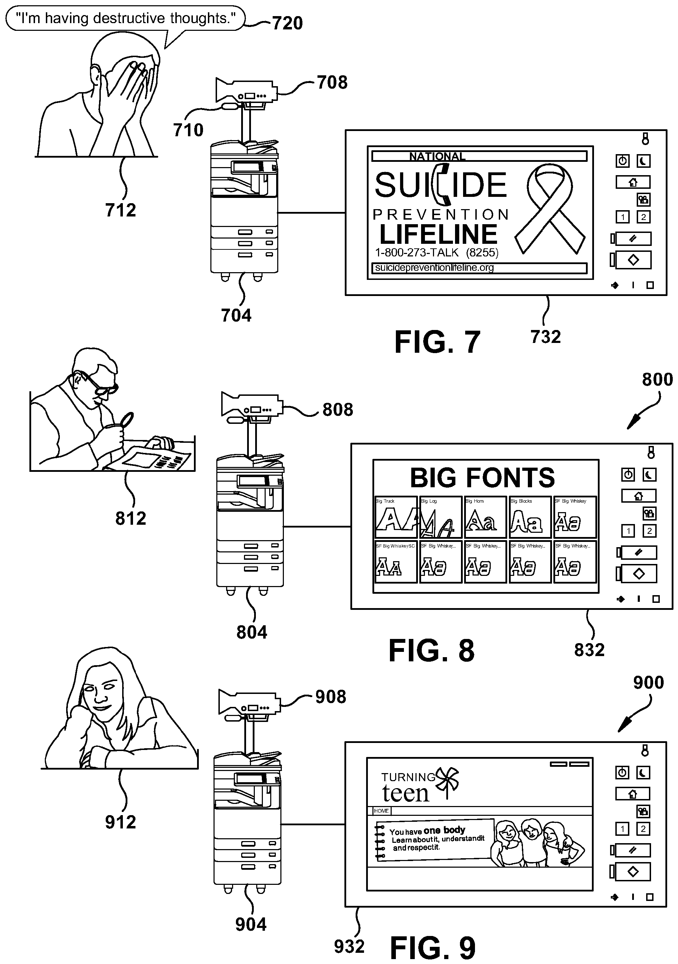

FIGURE 7 illustrates an example embodiment of a dynamic user interface generation system 700 including MFP 704 and associated camera 708 and microphone 710. In this example, camera 708 captures a picture of user 712 and the microphone 710 captures verbal communications 720 from the user 712, the characteristics of whom lead to a conclusion that he is distraught. In this example, the user also texts, prints or scans a document including an indicators of self-destructive risks. In this instance, user interface 732 directs the user to assistance.

FIGURE 8 illustrates an example embodiment of a dynamic user interface generation system 800 including MFP 804 and associated camera 808. In this example, camera 808 captures a picture of user 812, the characteristics of whom lead to a conclusion that he is visually impaired. In this instance, user interface 832 is generated with larger fonts.

FIGURE 9 illustrates an example embodiment of a dynamic user interface generation system 900 including MFP 904 and associated camera 908. In this example, camera 908 captures a picture of user 912, the characteristics of whom lead to a conclusion that she is a teenage girl. In this instance, user interface 932 is generated more conducive to that gender and age.

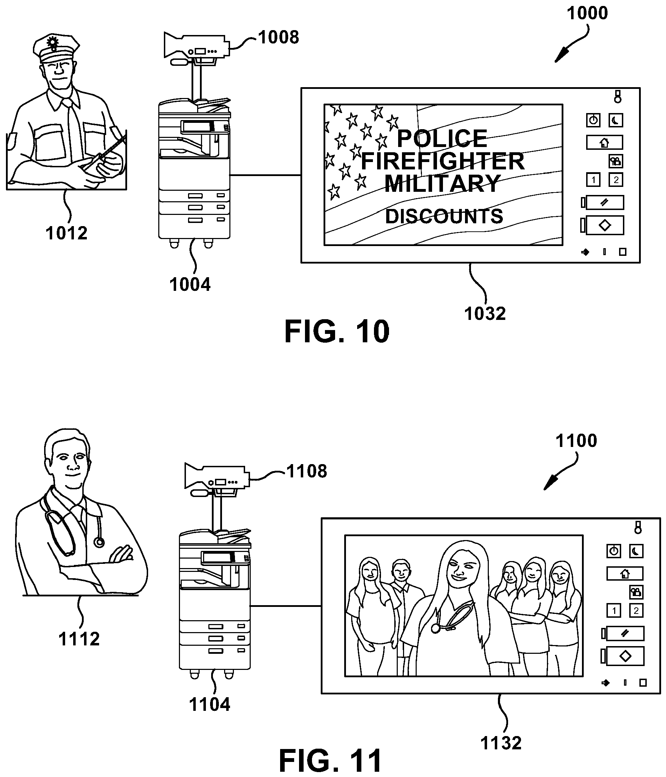

FIGURE 10 illustrates an example embodiment of a dynamic user interface generation system 1000 including MFP 1004 and associated camera 1008. In this example, camera 1008 captures a picture of user 1012, the characteristics of whom lead to a conclusion that he is member of law enforcement. In this instance, user interface 1032 includes links to police, firefighter and military discounts that may be of interest.

FIGURE 11 illustrates an example embodiment of a dynamic user interface generation system 1100 including MFP 1104 and associated camera 1108. In this example, camera 1108 captures a picture of user 1112, the characteristics of whom lead to a conclusion that he is in the medical profession. In this instance, user interface 732 is created that targets needs of the medical industry.

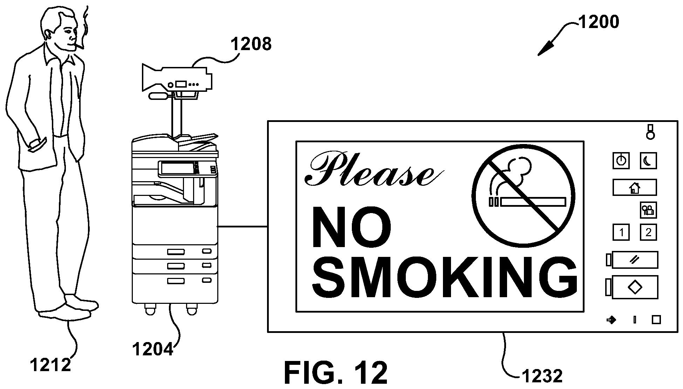

FIGURE 12 illustrates an example embodiment of a dynamic user interface generation system 1200 including MFP 1204 and associated camera 1208. In this example, camera 1208 captures a picture of user 1212, the characteristics of whom lead to a conclusion that he is engaging in conduct that is not permitted in this location. In this instance, user interface 1232 is generated that informs the user 1212 that the conduct is not permitted.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A system comprising:
a user interface including a touchscreen;
memory storing interface data for each of a plurality of user interface options, wherein each user interface option is associated with one or more physical user characteristics;
a document processing engine;
a data interface;
a camera configured to capture digital images; and
a processor configured to:
detect physical characteristics of a user from a digital image captured from the camera,
select a user interface option associated with physical user characteristics that correspond to detected physical characteristics,
install the selected user interface on the touchscreen;
receive a document processing instruction via the selected user interface from the user via the touchscreen, and
commence a document processing operation on the document processing engine in accordance with the received document processing instruction.

2. The system of claim 1 wherein:
the camera is further configured capture a sequence of digital images, and
the processor is further configured to detect a user in motion in accordance with the captured sequence of digital images, and detect the physical characteristics responsive to detected user motion.

3. The system of claim 2 wherein the processor is further configured to identify a device user in accordance with detected physical characteristics.

4. The system of claim 2 or 3, wherein the physical user characteristics include one or more of user height, user age, user gender, and user apparel.

5. The system of any one of claims 1 to 4, wherein the processor is further configured to:
receive an electronic document provided by a user;
analyze content of the received electronic document; and
identify a physical characteristic of the user in accordance with analyzed electronic document content.

6. The system of any one of claims 1 to 5, wherein the processor is further configured to:
determine when detected physical characteristics are insufficient to select a user interface option, and
install a default user interface when a determination is made that detected physical characteristics are insufficient.

7. The system of any one of claims 1 to 6, wherein the processor is further configured to:
generate an acceptability prompt on the user interface onto which the selected user interface is installed, and
selectively install a default user interface in accordance with user input received responsive to the acceptability prompt.

8. A method comprising:
storing, in a memory, user interface data for each of a plurality of user interface options, wherein each user interface option is associated with one or more physical user characteristics;
capturing, by a camera, digital images;
detecting, via a processor, physical characteristics of a user from a digital image captured from the camera;
selecting a user interface option associated with physical user characteristics that correspond to detected physical characteristics;
installing the selected user interface option on a touchscreen user interface;
receiving a document processing instruction via the selected user interface option from a user via the touchscreen; and
commencing a document processing operation on a document processing engine in accordance with the received document processing instruction.

9. The method of claim 8 further comprising:
capturing a sequence of digital images;
detecting a user in motion in accordance with a captured sequence of digital images; and
detecting the physical characteristics responsive to detected user motion.

10. The method of claim 9 further comprising identifying a device user in accordance with detected physical characteristics.

11. The method of claim 9 or 10 wherein the physical user characteristics include one or more of user height, user age, user gender, and user apparel.

12. The method of any one of claims 8 to 11, further comprising:
receiving an electronic document provided by a user;
analyzing content of the received electronic document; and
identifying a physical characteristic of the user in accordance with analyzed electronic document content.

13. The method of any one of claims 8 to 12, further comprising:
determining when detected physical characteristics are insufficient to select a user interface option; and
installing a default user interface when a determination is made that detected physical characteristics are insufficient.

14. The method of any one of claims 8 to 13, further comprising:
generating an acceptability prompt on the user interface onto which the selected user interface is installed; and
selectively installing a default user interface in accordance with user input received responsive to the acceptability prompt.
